# EUROPÄISCHE PATENTANMELDUNG

(11) **EP 1 257 114 A1**
(43) Veröffentlichungstag der Anmeldung: **13.11.2002**
(21) Anmeldenummer: 01111113.5
(22) Anmeldetag: 08.05.2001
(51) Int. Cl.: H04N 1/54

(54) **Tintenstrahl-Bilderzeugungseinrichtung und Verfahren zu deren Betrieb**

(71) Anmelder: IMIP LLC, Wilmington, Delaware 19801 (US)
(72) Erfinder: Franzke, Dieter, 5210 Windisch (CH)
(74) Vertreter: Schwabe - Sandmair - Marx

(57) **Zusammenfassung**

Die Erfindung betrifft eine Tintenstrahl-Bilderzeugungseinrichtung zur Abbildung digitaler Bilddaten von fotografischen Bildern mit mindestens einem Druckkopf (32) der mehr als drei Grundfarben bzw. Tintenstrahldruckfarben zur Verfügung hat, die einen Farbraum aufspannen wobei eine Recheneinrichtung die Lage bzw. Farbkoordinaten von Farbwerten der Bilddaten in dem Bildraum bestimmt, der durch die Farben des Druckkopfes aufgespannt wird und wobei eine Bestimmungseinrichtung ermittelt, mit welchen Grund- bzw. Tintenstrahldruckfarben oder deren Mischungen oder welchen Farbdichten davon die Farbwerte der Bilddaten darstellbar sind, wobei eine Schwellenwerteinrichtung (20), die wenigstens eine Schwelle für einen Bedeckungsgrad oder dgl. wenigstens eines Druckmediums enthält, vorgesehen ist, und wobei eine Bewertungseinrichtung bewertet, ob ein ermittelter Farbsatz eine große Tintenmenge oder eine geringe Tintenmenge erfordert so dass anhand dieser Bewertung die Schwellenwerteinrichtung in Abhängigkeit von der Schwelle für das Druckmedium einen der Farbsätze auszuwählen vermag, um unter Verwendung einer Druckkopfsteuereinrichtung (30) die Bilddaten mittels des Druckkopfes (32) mit dem ausgewählten Farbsatz abbilden zu können.

## Beschreibung

Die Erfindung betrifft eine Tintenstrahl-Bilderzeugungseinrichtung zur Abbildung digitaler Bilddaten von fotografischen Bildern gemäß dem Patentanspruch 1 sowie gemäß dem Patentanspruch 6 und ein Verfahren zum Steuern einer Tintenstrahl-Bilderzeugungseinrichtung gemäß dem Patentanspruch 11 sowie dem Patentanspruch 12.

Tintenstrahldrucker herkömmlicher Art verwenden meist drei Grundfarben, um farbliche Wiedergaben von Bildern zu erstellen. In der Regel werden als Grundfarben Cyan, Magenta und Gelb verwendet. Eine größere Farbpalette kann noch erreicht werden, indem als weitere Drucktinte Schwarz hinzugefügt wird. Um eine bessere farbliche Auflösung zu erzielen, werden von speziellen Tintenstrahldruckern auch sechs oder sogar acht Farben eingesetzt, beispielsweise bei der professionellen Herstellung von Plakaten oder dgl. Wesentlich ist hierbei auch die Verwendung eines bestimmten Papiers, da der farbliche Eindruck für den Betrachter auch stark davon abhängt, wie ein Druckmedium Tinte aufsaugt, bzw. wie die Tinte auf der Oberfläche eines Druckmediums verläuft und dabei durchmischt wird bzw. verläuft.

Andererseits ist es für eine gewünschte Farbe, die mittels eines Tintenstrahldruckers hergestellt werden soll, möglich, diese mittels verschiedener Mischungen der im Tintenstrahldrucker vorhandenen Grundfarben herzustellen. So lassen sich diverse Farben durch unterschiedliche Mischungen bereits von drei Grundfarben herstellen. Bei mehr als drei Druckerfarben, etwa sechs oder acht Druckerfarben, vervielfacht sich die Möglichkeit der Herstellung von Farben nochmals. Es ergeben sich damit viele verschiedene Farbsätze, um ein und die selbe Farbe rechnerisch herzustellen. Jedoch können diese Farben, obwohl sie farbmesstechnisch gleich sind, für das menschliche Auge einen unterschiedlichen Farbeindruck. Dies wird zusätzlich noch von der Oberflächenqualität, dem Saugverhalten und anderen Qualitätsparametern des Druckmediums, etwa eines Fotopapieres oder dgl. mitbestimmt.

Es ist demzufolge eine Aufgabe gemäß der vorliegenden Erfindung, den Nachteilen im Stand der Technik soweit als möglich Abhilfe zu verschaffen.

Insbesondere soll eine Tintenstrahl-Bilderzeugungseinrichtung zur Verfügung gestellt werden, die für den Betrachter einen optimalen farblichen Eindruck zur Verfügung stellen kann.

Ferner ist es eine bevorzugte Aufgabe, die gewünschten Farben mit einem minimierten Einsatz an Tintenmaterial auszubilden.

Eine weitere Aufgabe gemäß der Erfindung ist es, sog. Gedächtnis-Schlüsselfarben, die auch "Memory Colours" genannt werden, optimiert wiederzugeben.

Gemäß der Erfindung wird wenigstens eine der genannten Aufgaben von dem Patentanspruch 1 bzw. dem Patentanspruch 6 und den unabhängigen Verfahrensansprüchen gelöst. Zweckmäßige Ausführungsformen bzw. Verfahrensvarianten werden durch die in den Unteransprüchen aufgelisteten Merkmale zur Verfügung gestellt. Das erfindungsgemäße Verfahren kann auch in der Form von Software, beispielsweise auch computerlesbaren Datenträgern oder in der Form einer computerlesbaren elektromagnetischen Wellenkonstellation zur vorliegenden Erfindung gezählt werden.

Gemäß der Erfindung weist eine Tintenstrahl-Bilderzeugungseinrichtung mit Merkmalen gemäß der Erfindung mindestens einen Druckkopf mit mehr als drei Grundfarben bzw. mit mehr als drei Tintenstrahldruckfarben auf, die einen Farbraum aufspannen. Eine Recheneinrichtung ist vorgesehen, um die Lage bzw. die Farbkoordinaten von Farbwerten der Bilddaten in dem Farbraum zu berechnen. Weiterhin ist eine Bestimmungseinrichtung vorgesehen, um zu bestimmen, mit welchen Grund- bzw. Tintenstrahldruckfarben oder deren Mischungen sowie insbesondere welchen Farbdichten davon, insgesamt - Farbsatz - genannt, die Farbdaten der Bilddaten darstellbar sind, wobei in der Regel mehrere mögliche Farbsätze ermittelt werden, weiterhin ist eine Schwellenwerteinrichtung vorgesehen, die wenigstens eine Schwelle für einen Bedeckungsgrad wenigstens eines Druckmediums enthält, wobei eine Bewertungseinrichtung vorgesehen ist, die bewertet, ob ein ermittelter Farbsatz eine große Tintenmenge oder eine geringe Tintenmenge erfordert, um insbesondere auf einem bestimmten vorgegebenen Druckmedium wiedergegeben zu werden. Dabei wählt die Schwellenwerteinrichtung in Abhängigkeit von der Schwelle für das verwendete Druckmedium einen der Farbsätze aus und unter Verwendung einer Druckkopfsteuereinrichtung werden die Bilddaten mittels des Druckkopfes mit dem ausgewählten Farbsatz ausgedruckt.

Auch ist es gemäß der Erfindung vorgesehen, statt mindestens einem Druckkopf mit mehr als drei Grundfarben eine Anordnung mit mindestens drei Druckköpfen mit jeweils mindestens einer Grundfarbe zum Einsatz bringen zu können. Die mindestens drei Druckköpfe sind dann dementsprechend zu steuern wie ansonsten der mindestens eine Druckkopf mit mehr als drei Grund- bzw. Druckfarben.

Auf diese Weise wird es abhängig von den Eigenschaften eines jeweils eingesetzten Druckmediums ermöglicht, abhängig von der gewünschten Farbe sowie der korrespondierenden Farbdichte einen bestimmten Farbsatz unter vielen möglichen Farbsätzen auszuwählen. So kann beispielsweise, wenn eine weniger starke Farbe aufzutragen ist, ein Farbsatz zur Erstellung dieser Farbe ausgewählt werden, der zur Bedruckung einer möglichst großen Fläche des Druckmediums führt.

Andererseits ist es möglich, wenn eine kräftige Farbe aufgetragen wird, die in sich eine hohe Farbdichte trägt, diese unter Einsatz einer geringen Menge an Tinte auszudrucken, zumal auch die Aufnahmefähigkeit des Druckmediums begrenzt ist.

Diese Vorgehensweise hat auch den günstigen Aspekt, dass zum Einen teilweise höhere Farbdichten erzeugt werden können, wobei andererseits auch die zum Einsatz gelangende Tintenmenge effektiver genutzt werden kann. Zum Anderen kann auch noch die Druckgeschwindigkeit erhöht werden, da wegen eines geringeren Einsatzes an Tintenmenge eine schnellere Trocknung der Tinte auf dem Druckmedium verzeichnet werden kann, so dass in der gleichen Zeit eine größere Informationsmenge gebracht werden kann, was zu einer größeren Bildoberflächenwiedergabe pro Zeiteinheit beitragen kann.

Eine ganz besondere Rolle kann die vorliegende Erfindung gemäß dem Anspruch 1 spielen, wenn eine große Anzahl an Grund- bzw. Druckfarben zum Einsatz kommt, so dass die Anzahl an zur Verfügung stehenden Farbsätzen noch zunimmt. Hier können ggf. auch mehr als ein Schwellenwert für ein eingesetztes Druckmedium zum Einsatz kommen, um eventuell das Verhalten des Druckmediums gegenüber unterschiedlichen Farbsätzen mit unterschiedlichen Auftragsmengen an Tinte optimal berücksichtigen zu können.

Besonders vorteilhaft lässt sich eine Tintenstrahl-Bilderzeugungseinrichtung einsetzen, wenn diese ferner eine Bilddatenanalyseeinrichtung aufweist, um zu bestimmen, ob die Bilddaten Gedächtnisschlüsselfarben, sog. "Memory Colours", enthalten. Ist dies der Fall, kann eine Gedächtnisschlüsselfarben-Zuordnungseinheit die ermittelten Farbbilddaten, die zu der Gedächtnisschlüsselfarbe passen, einem Farbsatz bzw. einer Tinte eines Farbsatzes zuordnen, der bzw. die der Gedächtnisschlüsselfarbe am nächsten kommt. Die vorhandene Druckkopfsteuereinrichtung kann den mindestens einen Druckkopf unter Verwendung des Zuordnungsergebnisses der Gedächtnisschlüsselfarben-Zuordnungseinheit beim Ausdrucken der Bilddaten entsprechend steuern.

Auf diese Weise kann für Farben, die in das menschliche Gedächtnis besonders eingeprägt sind, wie etwa menschliche Hautfarbe, Himmelsblau, Straßengrau, oder dgl., ein besonders gutes Abbildungsergebnis erzielt werden, indem zum Abdrucken dieser Farbe ein Farbsatz oder unmittelbar eine entsprechende Tinte eingesetzt wird, der bzw. die dieser Gedächtnisschlüsselfarbe bzw. Memory Colour unmittelbar entspricht oder besonders nahe kommt. Auch hier kann wieder der oben genannte Schwellenwert zum Einsatz kommen, wenn beispielsweise mehrere Farbsätze für die Darstellung der betreffenden Gedächtnisschlüsselfarbe in Frage kommen.

Um die Gedächtnisschlüsselfarben herauszufinden, kann eine farbliche Analyse von Bilddaten eines Bildes durchgeführt werden, durch die basierend auf Wahrscheinlichkeiten ermittelt wird, welche Farben in einem Bild mit hoher Wahrscheinlichkeit einer Gedächtnisschlüsselfarbe entsprechen. Andererseits ist es auch möglich, eine Musterdetektion durchzuführen, um Gedächtnisschlüsselfarben herauszufinden. Dabei kann etwa nach einem Gesichtsmuster in einem Bild gesucht werden, um mit hoher Wahrscheinlichkeit, wenn nicht sogar mit Sicherheit, feststellen zu können, ob menschliche Haut als Träger einer Gedächtnisschlüsselfarben in einem Bild vorhanden ist, um diese dann erfindungsgemäß bearbeiten zu können.

Gemäß dem weiteren Gesichtspunkt nach der vorliegenden Erfindung wird folglich auch eine Tintenstrahl-Bilderzeugungseinrichtung vorgeschlagen, deren Vorteile darauf basieren, dass Gedächtnisschlüsselfarben in einem Bilddatensatz ermittelt werden und dann zum Ausdrucken dieser Farben ein Farbsatz ausgewählt wird, der diese Farbe besonders farbgetreu wiedergibt. Dabei kann ebenfalls abhängig vom eingesetzten Druckmedium ein Schwellenwert (oder mehrere Schwellenwerte) eingesetzt werden, um, falls es mehrere mögliche Farbsätze gibt, die sich gleichermaßen eignen, wiederum einen Farbsatz auszuwählen, der für eine optimierte farbliche Wiedergabe unter Einsatz einer möglichst geringen Tintenmenge sorgt, und damit eine höhere Druckgeschwindigkeit zulässt, bzw. schnellere Trocknung, oder, falls die darzustellende Farbe eine geringe Farbdichte aufweist, möglichst einen Farbsatz verwendet, der eine große Tintenmenge benötigt.

Bezüglich beider Gesichtspunkte nach der vorliegenden Erfindung ist eine Transformationseinrichtung vorsehbar, die die Bilddaten unter Einsatz des ausgewählten Farbsatzes bzw. der ausgewählten Tinte in Druckkopfsteuerdaten wandelt, die der Druckkopfsteuereinrichtung zugeführt werden.

Um weiterhin eine verbesserte Darstellung der Farben erreichen zu können, können auch mehrere Druckköpfe vorgesehen sein, die jeweils unter Einsatz ihrer jeweiligen Grundfarben angesteuert werden, um eine optimierte Farbdarstellung zur Verfügung stellen zu können.

Dabei kann z.B. auch ein relativ einfaches Modell eines Druckkopfes mit lediglich drei Druckfarben zum Einsatz gebracht werden, wenn nur die optimal mit den in diesem Druckkopf vorhandenen Druckfarben ausdruckbaren Farbbilddaten ausgegeben werden. Ein dann unmittelbar anschließender weiterer Druckkopf, der ebenfalls nur drei Druckfarben zur Verfügung hat, die sich von den ersten drei Druckfarben unterscheiden, die wiederum durch diesen weiteren Druckkopf optimal bzw. optimiert ausgedruckt werden können, kann dann einen weiteren Farbsatz bereitstellen. D.h., mit mehreren unmittelbar hintereinander angeordneten vergleichsweise primitiven Druckköpfen mit jeweils unterschiedlichen Farben können zum Einen eine Vielzahl von unterschiedlichen Farbsätzen zur Verfügung gestellt werden und gleichzeitig könnten die jeweiligen Druckköpfe Farben aufweisen, die unmittelbar bei Gedächtnisschlüsselfarben oder identisch mit diesen sind.

Umgekehrt könnte auch ein Druckkopf mit vielen Farben zum Einsatz gelangen, wobei aus den diversen Farben bzw. Grundfarben Farbsätze kombiniert werden könnten, um mehrere Farbräume aufzuspannen. Ein Druckkopf mit z.B. 10 Farben kann etwa drei oder vier Kombinationen aus jeweils n Farben (mit n zwischen 3 und 9) zum Aufspannen jeweiliger Farbräume zur Verfügung stellen.

Es wäre auch möglich, etwa abhängig von der Existenz von Gedächtnisschlüsselfarben auch komplexere Druckköpfe mit vier, sechs oder acht Druckfarben abhängig von den wiederzugebenden Farben jeweils nur für sich allein zum Einsatz zu bringen.

Um noch mehr verschiedene Farben und Farbabstufungen zur Verfügung stellen zu können, kann auch noch ein Verdünnungsmittel von einem oder mehreren Druckköpfen zum Einsatz gebracht werden.

Gemäß einem weiteren Gesichtspunkt nach der vorliegenden Erfindung werden Verfahren vorgeschlagen, um eine Tintenstrahl-Bilderzeugungseinrichtung zum Ausdrucken von Bilddaten von fotografischen Bildern mit einem Druckkopf für mehr als drei Grund- bzw. Tintenstrahldruckfarben zu realisieren. Dabei bleibt festzuhalten, dass auch. Computer, die für generelle Zwecke eingesetzt werden, entsprechend programmierbar sind, so dass sie die Computer- bzw. Datenstruktur bezogenen Aufgaben durchführen können, die die Gegenstände gemäß den unabhängigen Produktansprüchen 1 und 6 erfordern. D.h., ein Computer kann eine Recheneinrichtung zur Berechnung der Lage- bzw. Farbkoordinaten von Farbwerten von Bilddaten in einem Farbraum enthalten, kann die Funktionen einer Bestimmungseinrichtung, einer Schwellenwerteinrichtung, einer Bewertungseinrichtung, einer Bilddatenanalyseeinrichtung, usw. erfüllen, so dass etwa auch ein herkömmlicher Computer mit einem entsprechend eingerichteten, evtl. auch herkömmlichen Tintenstrahldrucker gemäß der vorliegenden Erfindung eingerichtet sein kann und deren Vorteile zumindest größtenteils zur Verfügung stellen kann.

Dabei ist es gemäß der Erfindung nach dem vorgeschlagenen Verfahren nötig, dass gemäß dem einen Gesichtspunkt Eigenschaften des zu bedruckenden Druckmediums so weit bekannt sind, dass ein Schwellwert oder auch mehrere Schwellwerte vorgegeben werden können, um festzustellen, ob ein verwendetes Druckmedium mit einem hohen Bedeckungsgrad oder mit einem niedrigen Bedeckungsgrad eines Tintenvolumens zu belegen ist. Dabei wird bei einem Farbton, der eine niedrige Farbdichte erfordert, die Schwelle so gelegt sein, dass eine möglichst große Fläche des Druckmediums bedeckt wird, während, wenn ein Farbton mit hoher Farbdichte erzeugt werden soll, die aufzubringende Tintenmenge möglichst klein gehalten wird. Dies spart zum Einen Tinte ein und zum Anderen kann durch die Verringerung der aufgebrachten Tintenmenge die Druckgeschwindigkeit gesteigert werden, da die geringere Auftragszeit und die geringere Trocknungszeit zur Beschleunigung der Erstellung eines Druckes beitragen können.

Gemäß dem zweiten Verfahren nach der Erfindung, werden die Bilddaten unmittelbar nach Gedächtnisschlüsselfarben oder nach Bildmustern, wie etwa Mustern, abgesucht, um bestimmte Bildbereiche für die Darstellung mittels einem Farbsatz oder einer Tinte zu qualifizieren, der bzw. die einer Gedächtnisschlüsselfarbe am nächsten kommt oder dieser unmittelbar entspricht.

Dem Fachmann ist nach dem Studium der vorliegenden Offenbarung klar, dass diese Erfindung auch eingesetzt werden kann, um Farbaufträge für andere Drucktechnologien oder Wiedergabetechnologien vorteilhafter vorzunehmen. Etwa kann beim Offset-Druck entsprechend auch unter Einsatz von Rotations-Offset-Druckmaschinen vorgegangen werden. Auch entsprechende Software gehört zur Erfindung, mit der Computerausdrucke oder Bildwiedergaben auf Bildschirmen aufgewertet werden können. Dementsprechend können die anliegenden Patentansprüche auch noch auf diese Gegenstände erweitert werden.

Bildinhaltabhängig können alle hier offenbarten Kombinationen von Bild- bzw. Farbbearbeitungen an lokal unterschiedlichen Stellen in dem gleichen Bild verwendet werden. D.h., wenn beispielsweise ein Bild Bereiche mit bestimmten Farben mit verschiedenen Schwellenwerten einerseits und Bereiche mit Gedächtnisschlüsselfarben andererseits aufweist, können die obigen bzw. nachfolgend erläuterten Verfahren kombiniert zum Einsatz gelangen.

Nachfolgend wird die vorliegende Erfindung unter Bezugnahme auf bevorzugte Ausführungsformen näher erläutert. Dabei werden weitere Merkmale, Zielsetzungen und Vorteile gemäß der vorliegenden Erfindung offenbart. Es zeigen:
- Fig. 1: ein Blockdiagramm einer Ausführungsform gemäß einem Gesichtspunkt nach der vorliegenden Erfindung;
- Fig. 2: ein Blockdiagramm einer Ausführungsform gemäß einem weiteren Gesichtspunkt nach der vorliegenden Erfindung; und
- Fig. 3: ein Beispiel eines Farbraumes.

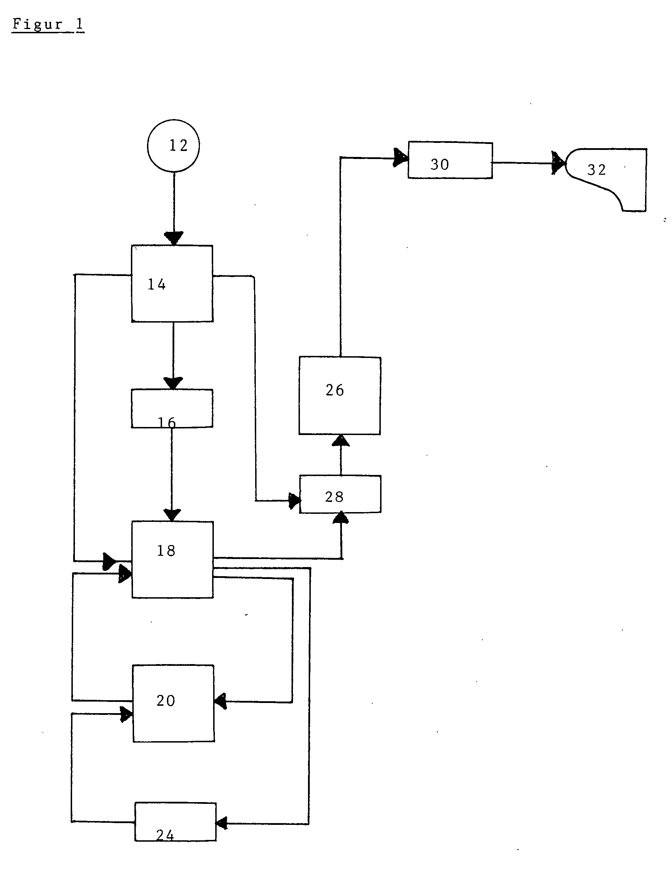

In Fig. 1 ist eine erste Ausführungsform mit Merkmalen gemäß der Erfindung, die dem voranstehend ersten Gesichtspunkt gemäß der Erfindung zuzuordnen ist, in ihren grundsätzlichen Einzelheiten dargestellt.

Die Position 12 bezeichnet einen Eingabeabschnitt, über den Bilddaten der Einrichtung gemäß Fig. 1 zugeführt werden, um letztendlich nach der Verarbeitung über einen Druckkopf mit mehr als drei Grundfarben bzw. Tintenstrahldruckfarben 32 ausgedruckt zu werden.

Die Position 12 steht für verschiedene Möglichkeiten, nämlich beispielsweise einen Scannerabschnitt, der Bilddaten durch Abtastung eines Negativfilms, von Diapositiven oder sonstigen herkömmlichen Bilddatenquellen erhält. Auch ist es möglich, hier eine Lesestation für digitale Speicher von Digitalkameras vorzusehen oder einen Datenanschluss an das Internet, über den entsprechend auszudruckende Bilddaten empfangen werden können.

Die Bilddaten werden von der Position 12 zu einem Bilddatenspeicher 14 übertragen, der die Bilddaten zur weiteren Bearbeitung und zum Abruf speichern kann.

Eine Recheneinrichtung 16 enthält Informationen über die Grundfarben- bzw. Tintenstrahldruckfarben, die dem Druckkopf zum Drucken zur Verfügung stehen. Aufgrund dieser Informationen zu den Grundfarben bzw. den Tintenstrahldruckfarben kann die Recheneinrichtung einen Farbraum rechnerisch aufspannen und die Lage bzw. die Farbkoordinaten von Farbwerten der Bilddaten in dem Farbraum bestimmen. Eine Bestimmungseinrichtung 18 ist vorgesehen, um zu errechnen, mit welchen Grund- bzw. Tintenstrahldruckfarben, deren Mischungen oder insbesondere auch welchen Farbdichten davon die Farbwerte der Bilddaten dargestellt werden können. Bei einem Tintenstrahldruckkopf mit mehr als drei Grund- bzw. Tintenstrahldruckfarben ergeben sich dabei jeweils mehr als eine mögliche Darstellungsform, d.h., es gibt jeweils mehrere möglich Farbsätze, die von der Bestimmungseinrichtung ermittelt werden. So ist es beispielsweise bei einem Tintenstrahldruckkopf mit vier Grundfarben, etwa Zyan, Magenta, Gelb und Grün, möglich, grüne Gegenstände unmittelbar durch die grüne Farbe herzustellen, oder aber eine Mischung von Zyan und Gelb einzusetzen. Auch könnte dem Grün auch noch eine geringe Menge an Gelb und/oder Zyan zugesetzt werden, das Grün und/oder die Mischung aus Zyan und Gelb könnten mit Lösungsmitteln verdünnt werden, und dgl. mehr. D.h., in der Regel wird eine entsprechende Bestimmungseinrichtung gemäß der Erfindung jeweils mehr als einen Farbsatz ermitteln, mit dem die gewünschte Farbe abgedruckt werden könnte.

Eine Schwellenwerteinrichtung 20 enthält Daten zu verschiedenen wesentlichen Eigenschaften eines Druckmediums, d.h., beispielsweise eine Hochglanzpapiers, eines normalen Papiers, oder anderer Papiersorten, die für den Druck von Farbfotografien mittels eines Tintenstrahldruckers von Bedeutung sind. Hierzu gehören z.B. die Menge an Tinte, die ein Druckmedium innerhalb einer vorgegebenen Zeit und auf einer vorgegebenen Fläche aufnehmen kann. Dabei kann das Druckmedium auch noch unterschiedliche Farben oder Tintenprodukte unterschiedlich schnell und in unterschiedlicher Menge aufnehmen. All diese Werte können nach Bedarf ggf. eingesetzt werden, um einen oder evtl. mehrere Schwellwerte für eine möglichst sparsame Verwendung einzusetzen.

Die Wahl der Schwellenwerte kann auch beispielsweise davon abhängig gemacht werden, ob eine möglichst hohe Flächendeckung des Papiers erreichet werden soll oder möglichst wenig Tinte verbraucht werden soll, sei es aus Kostengründen oder wegen beschränkter Aufnahmekapazität des Papiers.

Es können auch mehrere Schwellen für ein Druckermedium zu definieren sein. Eine Schwelle könnte dabei durch die maximale Tintenaufnahmefähigkeit gegeben sein und die andere Schwelle könnte dann eine bestimmte Druckgeschwindigkeit ermöglichen.

Eine Bewertungseinrichtung 24 ermittelt dann, ob ein bestimmter ermittelter Farbsatz eine große Tintenmenge oder eine geringe Tintenmenge erfordert. Natürlich wird dieses Ermittlungsverfahren für jeden der diversen möglichen einsetzbaren Farbsätze durchgeführt. Sodann wird von der Schwellenwerteinrichtung in Abhängigkeit von der Schwelle für das spezifisch eingesetzte Druckmedium einer der Farbsätze ausgewählt und unter Verwendung einer Druckkopfsteuereinrichtung 30 wird mittels des Druckkopfes mit dem ausgewählten Farbsatz gedruckt. Dabei kann für jede Farbe ein spezifischer Farbsatz ermittelt und eingesetzt werden. Anschließend werden Bilddaten vom Speicher 14 abgerufen, um die für diese Bilddaten ermittelten Farbsätze und insbesondere zumindest einen Farbsatz anzuwenden, um auf diese Weise Steuerdaten zu erstellen, die in einen Bilddaten-Druckkopfsteuerdatenspeicher 26 zum Abruf durch eine Druckkopfsteuereinrichtung 30 bereitzuhalten.

Aufgrund eines durch diese Einrichtung beschrittenen Verfahrens können beispielsweise etwa relativ blasse Farben, die eine niedrige Farbdichte aufweisen, mittels eines Farbsatzes ausgedruckt werden, der eine große Oberflächenbelegung für das Druckmedium ermöglicht, so dass blasse Farben bzw. helle Farben dennoch naturgetreu wirken können und ein gerasterter Oberflächeneindruck vermieden werden kann. Umgekehrt kann für Farbtöne mit hoher Farbdichte ein Verlaufen vermieden werden, indem die aufgebrachte Tintenmenge möglichst klein gehalten wird, zumal die Aufnahmefähigkeit des Druckmediums in der Regel begrenzt ist.

Prinzipiell können natürlich die für eine bestimmte Auswahl von Grundfarben eines Tintenstrahldruckers erstellbaren Farbsätze auch in Tabellenform gespeichert sein und es kann lediglich über die Ermittlung eines abzudruckenden Farbtones und dessen Lage relativ im Farbraum bzw. relativ zu den tabellierten Werten und relativ zu einem oder mehreren druckmediumsspezifischen Schwellwerten eine Auswahl eines passenden Farbsatzes getroffen werden. Da jedoch Rechnerkapazität immer leichter und kostengünstiger zur Verfügung gestellt werden kann, kann auch für die Bilddaten auch von einzelnen Bildbereichen mit einzelnen Farben jeweils im Einzelnen ein passender Farbsatz errechnet werden.

Es ist zu bemerken, dass es für den Fachmann erkennbar ist, dass die in Fig. 1 aufgeführten Abschnitte auch insgesamt softwaremäßig durch einen Rechner realisiert werden können, der für die Steuerung eines eventuell sogar herkömmlichen Tintenstrahldruckers zum Einsatz gelangt.

Gemäß der Erfindung kann beispielsweise abhängig vom Farbsatz aus den Bilddaten die Information für den Druck gewonnen werden. D.h., es kann ermittelt werden, welche Farbtropfen, welcher Farbe in welcher Größe zur Wiedergabe der Bilddaten zu Papier zu bringen sind. Hat ein Tintenstrahldrucker z.B. die Farben CMYK, LightC, LightM, Grün, Orange, MediumK, und LightK in seinem Farbsatz, kann gemäß der Erfindung für ein Schwarz-Weiß-Bild K, MediumK und LightK ausgewählt werden. Für ein Landschaftsbild dagegen wird C, M, Y, LightC und LightM ausgewählt.

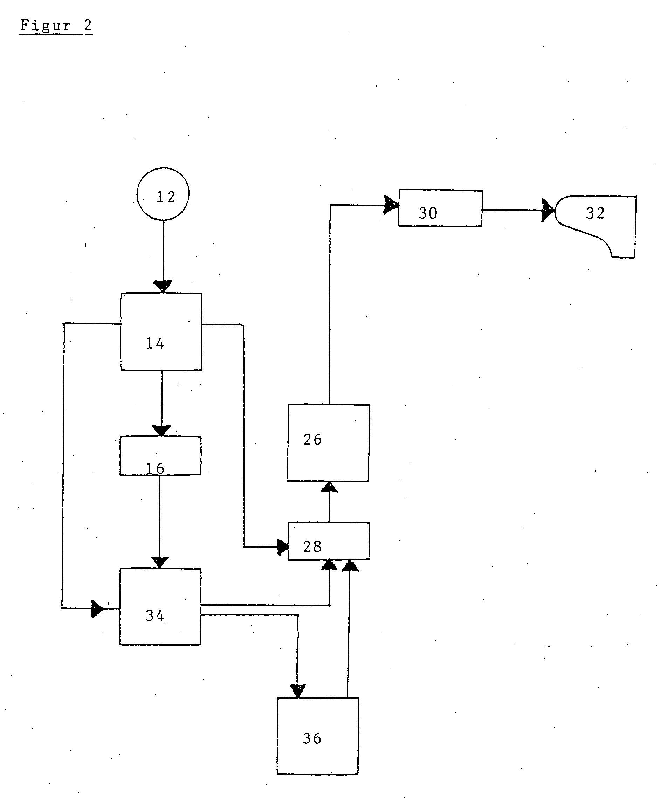

Die Ausführungsform gemäß Fig. 2 zeigt Abschnitte, die im Wesentlichen gleichermaßen arbeiten, wie dieses die entsprechend bezeichneten Abschnitte in Fig. 1 bewerkstelligen. Es werden folglich unten lediglich abweichende Abschnitte und deren Funktion erörtert.

Dementsprechend ist eine Bilddatenanalyseeinrichtung 34 vorgesehen, über die Bilddaten aus dem Bilddatenspeicher 14 noch dem Vorhandensein von bestimmten Farben, sog. Gedächtnisschlüsselfarben bzw. Memory Colours abgesucht werden können. Zur Ermittlung von derartigen Gedächtnisschlüsselfarben sind dem Fachmann diverse Verfahren bekannt, auf die allesamt zurückgegriffen werden kann. Es ist dementsprechend hier nicht nötig, explizit eines oder mehrere dieser Verfahren zu erörtern.

Nachdem von der Bilddatenanalyseeinrichtung 34 ermittelt worden ist, welche Bilddaten evtl. am besten durch vorausgewählte Farbsätze oder unmittelbar durch bestimmte Tinten dargestellt werden können, die den gewünschten Gedächtnisschlüsselfarben am nächsten kommen oder sogar mit diesen übereinstimmen, werden entsprechende Informationen an eine Gedächtnisfarbenzuordnungseinrichtung 36 übermittelt, die passenden Bilddaten derartige Farbsätze oder unmittelbar passende Tinten zuordnet. Andere Bilddaten, denen keine Gedächtnisschlüsselfarbe zugeordnet werden kann, werden unmittelbar einer Transformationseinrichtung 28 zugeführt. Die Transformationseinrichtung 28 verwendet dementsprechend Steuerdaten von der Bilddatenanalyseeinrichtung 34 und der Gedächtnisschlüsselfarben-Zuordnungseinrichtung 36, um entsprechend diesen Daten Bilddaten von dem Bilddatenspeicher 14 zu modifizieren und zu einem Bilddaten-Druckkopfsteuerdatenspeicher 26 zu übermitteln. Von hier werden diese Steuerdaten durch die Druckkopfsteuereinrichtung abgerufen und ein Druckkopf 32 wird gemäß diesen Steuerdaten betrieben.

Es ist leicht ersichtlich, dass die beiden vorteilhaften Ausführungsformen gemäß den Fig. 1 und 2 auch miteinander kombiniert werden können, um bestimmte Bilddaten, die nicht als Gedächtnisschlüsselfarbenträger bestimmt werden, gemäß Fig. 1 aufzubereiten, bevor diese über einen Druckkopf ausgedruckt werden, während andere Bilddaten, die Gedächtnisschlüsselfarben zugeordnet werden können, gemäß Fig. 2 aufbereitet werden.

Wenn bei einer Analyse der Bilddaten das Endergebnis ermittelt wird, dass besonders große Mengen an Tinte benötigt werden, um die gewünschten Farben auszudrucken, könnte dies auch als Entscheidungsaspekt dienen, um ein für große Tintenmengen besonders geeignetes Druckmedium zuzuführen, das anstelle eines üblichen Druckmediums eingesetzt werden könnte.

Dementsprechend könnte gemäß der Erfindung auch eine Tintenstrahl-Bilderzeugungseinrichtung mit diversen Druckköpfen zum Einsatz gelangen, wobei einer oder mehrere Druckköpfe für bestimmte Aufgaben spezialisiert sind und wobei sogar nach Analyse von Bilddaten eine Entscheidung gefällt werden kann, welches Druckmedium für bestimmte Bilder eingesetzt werden soll. Auch hier könnte eine Optimierung einerseits des Druckergebnisses und andererseits des Kostenaufwandes erzielt werden.

Am Rande des Farbraumes, wo nur eine Möglichkeit besteht, die Farbe naturgetreu abzubilden, kann gemäß der Erfindung wie folgt vorgegangen werden.
a) Es wird eine Kombination von Farben benutzt, welche diesen Punkt im Farbraum enthält.
b) Es wird die Kombination von Farben benutzt, welche nach andern Kriterien für geeignet gehalten werden. Nur für die Punkte, welche sonst nicht dargestellt werden könnten, werden dann die Tintenkombinationen eingesetzt, welche diese Darstellung ermöglichen.
c) Es wird die Kombination von Farben eingesetzt, welche nach bestimmten Kriterien für geeignet befunden worden ist. Demnach werden Farben, welche außerhalb des mit dieser Kombination erzeugbaren Farbraumes sind, mittels ColorManagement in diesem Farbraum abgebildet.

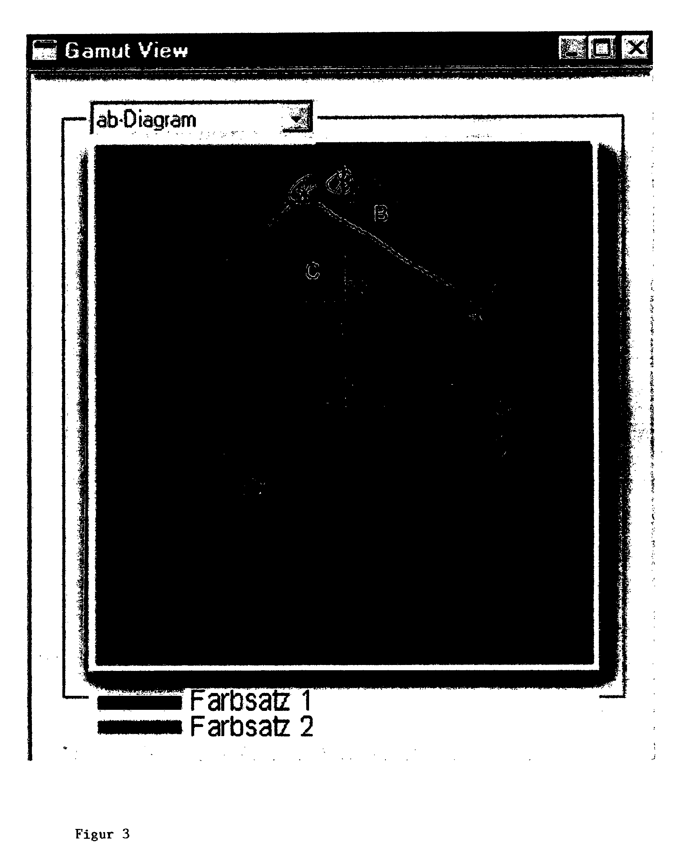

Die Figur 3 basiert auf dem Lab-Farbraum, der dem Fachmann prinzipiell bekannt ist. Eine Projektion in die ab-Ebene ist zu erkennen. Die L-Achse, die für die Helligkeit des Farbtons steht, ist senkrecht auf der Papierebene. Zur besseren Veranschaulichung ist der Ausdruck in Farbe. Es sind zwei Farbräume gezeigt, welche durch 3 Grundfarben Cyan, Magenta und Gelb aufgespannt werden. Die Lage der Mischfarben Grün, Blau und Rot, welche jeweils durch zwei Grundfarben dargestellt werden können, sind ebenfalls eingezeichnet.

Folgendes kann aus diesem Beispiel erkannt werden:
i) Stellt sich bei der Bildanalyse heraus, dass bevorzugt Farben im Bereich von A dargestellt werden müssen, ist ein Farbsatz 1 zu verwenden. Im Falle von Farben im Bereich B ist ein Farbraum 2 zu bevorzugen. Im Falle von C wären beide Farbsätze annähernd gleichwertig.
ii) Würde man den Farbsatz 1 nun durch eine weitere Farbe ergänzen - in der Figur 3 die Farbe Blau - die bei Punkt D liegt, dann ergäbe sich die Situation, dass Farben im Bereich von D mit relativ wenig Tinte hergestellt werden können, weil man nicht Cyan und Magenta mischen, und damit das aufzubringende Tintenvolumen erhöhen muss.

## Patentansprüche

1. Tintenstrahl-Bilderzeugungseinrichtung zur Abbildung digitaler Bilddaten von fotografischen Bildern
- mit mindestens einem Druckkopf (32) bzw. einer Druckkopfanordnung mit mehr als drei Grundfarben bzw. Tintenstrahldruckfarben, die einen Farbraum aufspannen;
- mit einer Recheneinrichtung (14) zur Berechnung der Lage bzw. Farbkoordinaten von Farbwerten der Bilddaten in dem Farbraum;
- mit einer Bestimmungseinrichtung (16), um zu bestimmen, mit welchen Grund- bzw. Tintenstrahldruckfarben oder deren Mischung bzw. insbesondere welchen Farbdichten davon, insgesamt - Farbsatz - genannt, die Farbwerte der Bilddaten darstellbar sind;
- mit einer Schwellenwerteinrichtung (20), die wenigstens eine Schwelle für einen Bedeckungsgrad wenigstens eines Druckmediums enthält;
- mit einer Bewertungseinrichtung (24), die bewertet, ob ein ermittelter Farbsatz eine große Tintenmenge oder eine geringe Tintenmenge erfordert;
- wobei die Schwellenwerteinrichtung (20) in Abhängigkeit von der Schwelle für das Druckmedium einen Farbsatz von evtl. mehreren Farbsätzen auswählt, und
- eine Druckkopfsteuereinrichtung (30) druckt mittels des Druckkopfes (32) die Bilddaten unter Verwendung des ausgewählten Farbsatzes aus.

2. Tintenstrahl-Bilderzeugungseinrichtung nach Anspruch 1, **dadurch gekennzeichnet, dass** eine Bilddatenanalyseeinrichtung (34) vorgesehen ist, um zu bestimmen, ob Bilddaten Gedächtnisschlüsselfarben enthalten, wobei eine Gedächtnisschlüsselfarben-Zuordnungseinheit (36) die durch die Bilddatenanalyseeinrichtung (34) ermittelten Farbbilddaten, die zu Gedächtnisschlüsselfarben passen, einem Farbsatz bzw. einer Tinte der Einrichtung zuordnet, der bzw. die der Gedächtnisschlüsselfarbe am nächsten kommt, wobei mit der Druckkopfsteuereinrichtung (30) unter Verwendung des Zuordnungsergebnisses der Gedächtnisschlüsselfarben-Zuordnungseinrichtung (36) der mindestens eine Druckkopf beim Ausdrucken der Bilddaten gesteuert wird.

3. Tintenstrahl-Bilderzeugungseinrichtung nach einem der Ansprüche 1 oder 2, **gekennzeichnet durch** eine Transformationseinrichtung (28), die die Bilddaten unter Verwendung des ausgewählten Farbsatzes in Druckkopfsteuerdaten wandelt, die der Druckkopfsteuereinrichtung (30) zugeführt werden.

4. Tintenstrahl-Bilderzeugungseinrichtung nach Anspruch 1, **dadurch gekennzeichnet, dass** mehrere Druckköpfe vorgesehen sind, deren jeweilige Grund- bzw. Tintenstrahldruckfarben jeweilige Farbräume aufspannen, oder dass ein Druckkopf mit einer Vielzahl von Grund- bzw. Tintenstrahldruckfarben vorgesehen ist, wobei mit der Vielzahl wenigstens zwei Untergruppen von Grund- bzw. Tintenstrahldruckfarben eingerichtet werden könne, um wenigstens zwei Farbräume aufzuspannen, wobei der Druckkopf bzw. der Farbansatz ausgewählt wird, dessen Farbsatz bzw. dessen Tinte eines Farbsatzes dem gewünschten Ergebnis am weitestgehendsten entspricht.

5. Tintenstrahl-Bilderzeugungseinrichtung nach einem der Ansprüche 1 bis 4, **dadurch gekennzeichnet, dass** wenigstens ein Druckkopf ein Farbverdünnungsmittel einzusetzen vermag, um einen erweiterten Farbraum zur Verfügung zu stellen.

6. Tintenstrahl-Bilderzeugungseinrichtung zur Abbildung digitaler Bilddaten von fotografischen Bildern, mit den folgenden Merkmalen:
mit mindestens einem Druckkopf und mehr als drei Grund- bzw. Tintenstrahldruckfarben, die einen Farbraum aufspannen;
mit einer Recheneinrichtung zur Berechnung der Lage bzw. der Farbkoordinaten von Farbwerten der Bilddaten in dem Farbraum;
mit einer Bilddatenanalyseeinrichtung (34), um zu bestimmen, ob die Bilddaten Gedächtnisschlüsselfarben enthalten;
mit einer Gedächtnisschlüsselfarben-Zuordnungseinheit (36), die durch die Bilddatenanalyseeinrichtung (34) ermittelte Farbbilddaten, die zu Gedächtnisschlüsselfarben passen, einem Farbsatz bzw. einer Tinte zuordnet, der bzw. die der Gedächtnisschlüsselfarbe am nächsten kommt;
mit einer Druckkopfsteuereinrichtung (30), die den mindestens einen Druckkopf (32) unter Verwendung des Zuordnungsergebnisses der Gedächtnisschlüsselfarben-Zuordnungseinheit beim Ausdrucken der Bilddaten steuert.

7. Tintenstrahl-Bilderzeugungseinrichtung nach Anspruch 6,
- mit einer Bestimmungseinrichtung (16), um zu bestimmen, mit welchen Grund- bzw. Tintenstrahldruckfarben oder deren Mischung bzw. insbesondere welchen Farbdichten davon, insgesamt ― Farbsatz ― genannt, die Farbwerte der Bilddaten darstellbar sind;
- mit einer Schwellenwerteinrichtung (20), die wenigstens eine Schwelle für einen Bedeckungsgrad wenigstens eines Druckmediums enthält;
- mit einer Bewertungseinrichtung (24), die bewertet, ob ein ermittelter Farbsatz eine große Tintenmenge oder eine geringe Tintenmenge erfordert;
- wobei die Schwellenwerteinrichtung (20) in Abhängigkeit von der Schwelle für das Druckmedium einen Farbsatz von evtl. mehreren Farbsätzen auswählt, und
- eine Druckkopfsteuereinrichtung (30) druckt mittels des Druckkopfes (32) die Bilddaten unter Verwendung des ausgewählten Farbsatzes aus.

8. Tintenstrahl-Bilderzeugungseinrichtung nach einem der Ansprüche 1 oder 2, **gekennzeichnet durch** eine Transformationseinrichtung (28), die die Bilddaten unter Verwendung des ausgewählten Farbsatzes in Druckkopfsteuerdaten wandelt, die der Druckkopfsteuereinrichtung (30) zugeführt werden.

9. Tintenstrahl-Bilderzeugungseinrichtung nach einem der Ansprüche 6 bis 8, **dadurch gekennzeichnet, dass** mehrere Druckköpfe vorgesehen sind, deren jeweilige Grund- bzw. Tintenstrahldruckfarben jeweilige Farbräume aufspannen, wobei der Druckkopf ausgewählt wird, dessen Farbsatz bzw. dessen Tinte eines Farbsatzes dem gewünschten Ergebnis am weitestgehendsten entspricht.

10. Tintenstrahl-Bilderzeugungseinrichtung nach einem der Ansprüche 6 bis 9, **dadurch gekennzeichnet, dass** wenigstens ein Druckkopf ein Farbverdünnungsmittel einzusetzen vermag, um einen erweiterten Farbraum zur Verfügung zu stellen.

11. Verfahren zum Steuern einer Tintenstrahl-Bilderzeugungseinrichtung zum Ausdrucken von Bilddaten von fotografischen Bildern, mit einem Druckkopf für mehr als drei Grund- bzw. Tintenstrahldruckfarben mit den folgenden Schritten:
eine Recheneinrichtung (16) berechnet anhand der Grund- bzw. Tintenstrahldruckfarben des mindestens einen Druckkopfes einen Farbraum und berechnet die Lage bzw. Farbkoordinaten von Farbwerten der Bilddaten;
es wird bestimmt, welche Grund- bzw. Tintenstrahldruckfarben oder deren Mischungen sowie insbesondere welchen Farbdichten davon, insgesamt― Farbsatz ― genannt, die Farbwerte der Bilddaten dargestellt werden können;
eine Schwellenwerteinrichtung wird mit wenigstens einem Schwellwert für einen Bedeckungsgrad oder dgl. wenigstens eines Druckmediums geladen;
es wird bewertet, ob ein ermittelter Farbsatz eine große Tintenmenge oder eine geringe Tintenmenge erfordert, um eine darzustellende Farbe zu drucken;
in Abhängigkeit von der Schwelle für das Druckmedium wird ein Farbsatz ausgewählt; und
abhängig vom ermittelten Farbsatz wird aus den Bilddaten die Information für den Druck gewonnen, um die Bilddaten mit einem möglichst passenden Eindruck abzudrucken.

12. Verfahren zum Steuern einer Tintenstrahl-Bilderzeugungseinrichtung zum Ausdrucken von Bilddaten von fotografischen Bildern mit einem Druckkopf für mehr als drei Grund- bzw. Tintenstrahldruckfarben, mit den folgenden Schritten:
es wird ein Farbraum aufgrund der dem Druckkopf (32) zur Verfügung stehenden Grund- bzw. Tintenstrahldruckfarben erzeugt, wobei eine Lage bzw. Farbkoordinaten von Farbwerten von Bilddaten in dem Farbraum berechnet werden;
die Bilddaten werden analysiert, um zu bestimmen, ob die Bilddaten Gedächtnisschlüsselfarben enthalten;
den durch die Bilddatenanalyseeinrichtung ermittelten Farbbilddaten, die zu Gedächtnisschlüsselfarben passen, wird ein Farbsatz bzw. wird eine Tinte eines Farbsatzes zugeordnet, der bzw. die der Gedächtnisschlüsselfarbe am nächsten kommt oder mit dieser übereinstimmt;
die Bilddaten werden unter Verwendung des Zuordnungsergebnisses der Gedächtnisschlüsselfarbenzuordnungseinrichtung modifiziert und mittels des mindestens einen Druckkopfes (32) ausgedruckt.

13. Verfahren nach Anspruch 11 und 12, **dadurch gekennzeichnet, dass** deren Schritte miteinander verbunden werden, wobei die Bilddaten, die Gedächtnisschlüsselfarben entsprechen, gemäß Anspruch 12 verarbeitet werden und die verbleibenden Bilddaten gemäß Anspruch 11 verarbeitet werden.
